(19) Europäisches Patentamt
European Patent Office
Office européen des brevets

(11) **EP 1 625 058 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(21) Anmeldenummer: **04732625.1**

(22) Anmeldetag: **13.05.2004**

(51) Int Cl.:
**B60T 8/36** *(2006.01)*   **B60T 15/02** *(2006.01)*
**G05B 13/04** *(2006.01)*

(86) Internationale Anmeldenummer:
**PCT/EP2004/050801**

(87) Internationale Veröffentlichungsnummer:
**WO 2004/101339 (25.11.2004 Gazette 2004/48)**

(54) **VERFAHREN ZUM LERNEN VON ANSTEUERKENNLINIEN FÜR HYDRAULIKVENTILE**

METHOD FOR LEARNING CHARACTERISTIC CURVES FOR HYDRAULIC VALVES

PROCEDE D'APPRENTISSAGE DE COURBES CARACTERISTIQUES DE COMMANDE POUR VANNES HYDRAULIQUES

(84) Benannte Vertragsstaaten:
**DE FR IT**

(30) Priorität: **14.05.2003 DE 10321783**

(43) Veröffentlichungstag der Anmeldung:
**15.02.2006 Patentblatt 2006/07**

(73) Patentinhaber: **Continental Teves AG & Co. oHG**
**60488 Frankfurt (DE)**

(72) Erfinder:
• **GRONAU, Ralph**
**35083 Wetter (DE)**
• **LOOS, Mirco**
**66583 Elversberg (DE)**
• **BURKHARD, Dieter**
**55411 Bingen-Büdelheim (DE)**

(56) Entgegenhaltungen:
WO-A-03/026941         DE-A- 3 833 881
DE-A- 10 142 040      DE-A- 19 602 244
DE-A- 19 707 960      US-A1- 2002 096 939

• **PATENT ABSTRACTS OF JAPAN Bd. 2003, Nr. 04, 2. April 2003 (2003-04-02) & JP 2002 347596 A (TOYOTA MOTOR CORP), 4. Dezember 2002 (2002-12-04)**

EP 1 625 058 B1

**Beschreibung**

Die Erfindung betrifft ein Verfahren zum Lernen von Ansteuerkennlinien für Hydraulikventile gemäß Oberbegriff von Anspruch 1.

In elektronisch regelbaren Kraftfahrzeugbremsen mit unter anderem Blockierschutzfunktionalität (ABS) besteht ein ständig steigender Bedarf an einer erhöhten Qualität der Regelung, wodurch sich neben einer verbesserten Sicherheit auch eine Erhöhung des Regelungskomforts erzielen lässt. Allerdings erfordert dies meißt aufwändige und damit kostenintensive hydraulische Anlagen, welche mit zusätzlichen Komponenten (Drucksensoren, Regelventile, Schaltblenden etc.) ausgestattet werden müssen.

Aus der EP 0 876 270 A1 (P 8598) geht das Grundprinzip eines Regelungszyklusses bei einer Blockierschutzregelung hervor. Nach dem dort beschriebenen Verfahren wird zur Steuerung des Bremsdruckaufbaus während eines Regelungsvorgangs in der aktuellen Bremsdruckaufbauphase der Gradient des Bremsdruckaufbaus in der vorangegangenen Bremsdruckaufbauphase berücksichtigt.

Ein Lernverfahren gemäß dem Oberbegriff von Anspruch 1 ist aus der DE 101 42 040 A1 bekannt.

Es ist weiterhin bekannt, zur Bereitstellung unterschiedlicher Druckgradienten zur Erhöhung des Komforts eine mechanische Gradientenumschaltung (Schaltblenden) vorzusehen, was jedoch aus Kostengesichtspunkten Nachteile mit sich bringt.

Gegenüber Schaltblenden stellen analog betriebene, elektrisch ansteuerbare Hydraulikventile eine Verbesserung dar, da diese flexibler eingesetzt werden können. Zur Bereitstellung eines analog einsetzbaren Hydraulikventils wird vielfach versucht, das Magnetfeld der Ventilspule und damit die Stößelposition zur Herstellung eines gewünschten Druckgradienten durch den Spulenstrom möglichst genau festzulegen. Die Stößelposition hängt dabei unter anderem von den aktuellen Druckverhältnissen und ventilspezifischen Fertigungstoleranzen recht empfindlich ab. Ziel der vorliegenden Erfindung ist es nun, die Genauigkeit bei der Ansteuerung von analog betreibbaren Ventilen zu verbessern, so dass reproduzierbar mit einem festgelegten Spulenstrom der gewünschte Druckgradient eingestellt werden kann. Neben den durch Fertigungstoleranzen verursachten Ungenauigkeiten besteht weiterhin das Problem, dass bei der Analogansteuerung die Genauigkeit der Differenzdruckregelung ebenfalls ausreichend hoch sein muss, wenn aus Kostengründen keine direkte Rückmeldung von einem im Bereich des Ventils angeordneten Drucksensor verfügbar ist. Zur Elimination der bereits erwähnten, durch fertigungstechnische Toleranzen verursachten Abweichungen zwischen Ventilstrom und Stößelstellung sind in der Regel zur Kalibrierung der Ventile aufwändige Messungen der individuellen Ventilcharakteristik nach der Herstellung der Ventile innerhalb des zusammengesetzten Bremssystems erforderlich. Hierzu müsste allerdings jedes hergestellte Bremsensteuerungsaggregat mit einem Prüfstand verbunden werden, was auf die Fertigungskosten einen unerwünscht großen Einfluss hätte.

Nach der Erfindung werden die vorstehend dargelegten Probleme durch das Kalibrierverfahren gemäß Anspruch 1 gelöst.

Gemäß dem Verfahren der Erfindung wird während des Betriebs einer Bremsvorrichtung, also z.B. während der Fahrt des Kfz, zunächst eine Ansteuerkennlinie vorgegeben. Diese vorgegebene Ansteuerkennlinie ist beispielsweise entweder werkseitig gespeichert oder wird einmalig bei der Inbetriebnahme des Bremsensteuergerätes durch eine zusätzliche Kalibrierroutine selbstständig erstellt. Die vorliegende Ansteuerkennlinie wird dann während elektronischen Bremsenregelungsvorgängen (z. B. während einer ABS- oder ESP-Regelung) neu berechnet oder korrigiert. Zur Korrektur wird ein Lernverfahren durchgeführt, bei dem entweder eine Neuberechnung der Ansteuerkennlinie erfolgt oder, was bevorzugt ist, Korrekturwerte erstellt werden, mit denen die vorgegebene Ansteuerkennlinie korrigiert wird.

Bei der bevorzugten Anwendung des erfindungsgemäßen Verfahrens in einer an sich bekannten Blockierschutzregelung, die auch erweitert sein kann, z.B. durch weitere Regelungen, wie ASR, GMB, ESP, EBV usw., wird auf an sich bekannte Weise bei einem überdrehenden Rad zunächst Druck in zumindest einem Radzylinder mittels eines entsprechenden Hydraulikventils abgebaut. Auf diese Druckaufbauphase folgt während einer ABS-Regelung eine sogenannte Druckaufbauphase, bei der mehrere Druckaufbauimpulse mit geeigneter Anzahl und Dauer erzeugt werden. Dieser Prozess läuft mehrfach hintereinander ab (Regelzyklen).

Eine direkte Ermittlung des aktuellen individuellen Radzylinderdrucks $p_z$ und des Radzylinderdrucks $p_z^i$, bei dem das betreffende Rad instabil wird (Blockierdruckniveau), kann in Vorrichtungen ohne radindividuelle Drucksensoren nicht durchgeführt werden. Verfahren zur Bestimmung dieser Größen bei Anlagen mit Digitalventilen sind an sich bekannt und werden in den Patentanmeldungen EP 0 876 270 A1 (P 8598) sowie DE 197 37 779 A ausführlich beschrieben. Bei diesen Verfahren werden Lernverfahren zur Berechnung der Druckaufbauzeiten durchgeführt, wobei sich aus der Folge der Druckaufbauimpulse ein mittlerer Druckaufbaugradient ergibt.

Im vorliegenden Fall wird im Gegensatz zu bekannten Bremsvorrichtungen zumindest in der jeweiligen Fahrsituation ein fester Druckaufbaugradient vorgegeben. Der Strom, mit der bei einem bestimmten Druckaufbaugradient das jeweils anzusteuernde Ventil geöffnet werden kann, ist eine variable Größe, welche es unter anderem zu ermitteln gilt. Aus dem Öffnungsstrom kann dann über einen Faktor ein Gradient am Ventil eingestellt werden. Die Druckaufbauzeit kann dabei im wesentlichen fest vorgegeben sein.

Aus der Summe der jeweils während einzelner Ansteuerintervalle hervorgerufenen Druckerhöhungen während der zum Druckaufbau notwendigen Einzelimpulse ergibt sich im wesentlichen die Gesamtdruckdifferenz des entsprechenden Regelzyklusses. Die entsprechenden Druckaufbauzeiten oder Druckanforderungen der einzelnen Intervalle dieser Druckaufbauphase ergeben in der Summe für jeden Regelzyklus eine Gesamtdruckaufbauzeit $T_{ist}$ entsprechend einem Gesamtdruckaufbau P, welche sich im Steuergerät, in dem der ABS-Algorithmus abläuft, für jede Druckaufbauphase radindividuell messen lässt.

Bevorzugt erstreckt sich das Lernverfahren über mehrere Zyklen der Blockierschutzregelung (Lernzyklus). In jedem oder in jedem geeigneten Zyklus wird dabei mit Hilfe der aus dem aktuellen Zyklus ermittelten Parameter nach einer rekursiven Formel eine Korrektur der vorgegebenen Kennlinie durchgeführt.

Nach dem Verfahren der Erfindung wird bevorzugt die Ansteuerkennlinie für das Hydraulikventil G = f (I, ∆p) bzw. I = f' (∆p, G) für jedes Ventil individuell direkt oder indirekt ermittelt, wobei I der Strom durch die zum Ansteuern des Ventils verwendete Magnetspule ist, G der durch das Ventil hervorgerufene Druckgradient und ∆p die am Ventil anliegende Druckdifferenz bei gerade noch geschlossenem Ventil. Da sich die Druckdifferenz bei einem geöffneten Ventil ändert, stellt der über die Funktionen f oder f' ermittelte Wert lediglich einen Näherungswert dar.

Nach einer bevorzugten Ausführungsform wird bei der Blockierschutzregelung zumindest in der gerade aktuell vorliegenden Fahrsituation (kann vom Reibwert abhängig sein) oder auch in allen Fahrsituationen ein fester, z.B. experimentell ermittelter, Druckaufbaugradient, von beispielsweise etwa 300 bar/s, vorgegeben. Die Vorgabe des Druckaufbaugradients erfolgt dabei durch Einstellen eines bestimmten, festen Ventilstroms. Mit diesem Druckaufbaugradienten wird die Regelung dann zur Durchführung des erfindungsgemäßen Lernverfahrens ausgeführt. Das hier beschriebene Verfahren ermittelt dann mit Hilfe der vorhandenen kalibrierten Kennlinie oder den eingelernten Korrekturgrößen den für diesen vorgegebenen Druckaufbaugradienten optimalen individuellen Ventilstrom.

Wie bereits erwähnt, kann besonders bevorzugt vorgesehen sein, dass der vorgegebene Druckaufbaugradient in Abhängigkeit von der ermittelten Fahrsituation auf die Reibwertverhältnisse der Fahrbahn angepasst wird. Dabei bleibt der vorgegebene und damit feste Druckaufbaugradient und damit der Ventilstrom allerdings zumindest bis zum Abschluss der momentanen Regelung konstant.

Nach dem Verfahren wird die Korrekturgröße k nach der Formel

$$k_n = 1 - (1 - K_{Fil,n-1}) * \sqrt{(T_{ist,n} / T_{soll,n})}$$

gebildet, wobei

$$K_{Fil,n-1} = ((K_{Fil,n-2} * (n - 2)) + k_n) / (n-1),$$

n die Anzahl der gelernten Werte k,

$T_{ist,n}$ die aufsummierte Aufbauzeit des aktuell durchgeführten Druckaufbaus und

$T_{Soll,n}$ die aus der gewünschten Druckdifferenz und dem Sollgradient berechnete Solldruckaufbauzeit ist. Darin ist die Druckdifferenz aus dem vorangegangenen Druckabbau ermittelt.

Alternativ geht bei der Ermittlung der Korrekturgröße eine Größe Q mit ein, welche der Quotient zwischen der Druckabbaudifferenz $\Delta P_{Abbau}$ des vorangegangenen Druckabbaus und der Druckaubaudifferenz $\Delta P_{Aufbau}$ des aktuell aufgebauten Drucks ist:

$$Q = \frac{\Delta P_{Aufbau}}{\Delta P_{Abbau}}$$

Die Größe Q wird bevorzugt mit der Korrekturgröße k multipliziert:

$$k_n = k_{n-1} * Q.$$

Auf diese Weise ergibt sich eine Korrektur der Kennlinie, welche in der Regel im Bereich von einigen Prozent liegt.

Eine weitere, alternativ bevorzugte Möglichkeit zur Ermittlung der Korrekturgröße k besteht darin, dass nach der Formel

$$k_n = k_{n-1} + Q * i$$

eine absolute Korrektur durchgeführt wird. Der Parameter i gibt dabei einen Verstärkungsfaktor an, welcher in Abhängigkeit der Größe Q gewichtet wird. Im letztgenannten Fall kann eine Berechnung der oben definierten Größe $k_{Fil,n-1}$ entfallen.

Bevorzugt wird eine Berechnung des Korrekturfaktors k nur dann vorgenommen, wenn der vorangegangene Regelzyklus eine Korrektur erforderlich macht. Eine Korrektur ist z. B. dann erforderlich, wenn die Anzahl der Aufbauimpulse nicht den Erwartungen entspricht.

Das Lernverfahren wird vorteilhafterweise individuell für jedes Rad durchgeführt. Die eingelernten Werte werden zweckmäßigerweise entweder über den Zündungslauf hinaus gespeichert oder für jede Regelung neu berechnet. Der Zähler n, der die Anzahl der berücksichtigten Regelzyklen speichert, kann abhängig oder unabhängig von dem aktuellen Zündungslauf auf einen Ausgangswert zurückgesetzt werden (Reset). Zweckmäßigerweise wird der Parameter n zu Beginn eines jeden Zündungslaufs zurückgesetzt. Auf diese Weise kann die gewünschte Genauigkeit der Ansteuerkennlinien in kürzerer Zeit erreicht werden.

Das Lernverfahren kann vorzugsweise dann als abgeschlossen gelten, wenn sich der aktuelle Werte von $k_i$ eines Zyklusses im Vergleich zum eingelernten Wert lediglich um nur noch weniger als 5 % geändert hat.

Die Gesamtdruckaufbauzeit $T_{soll}$ kann an sich in weitestgehend beliebiger Weise auf mehrere Pulse aufgeteilt werden, wobei der optimale Wert für die Anzahl der Pulse von den elektrischen und hydraulischen Eigenschaften des Bremssystems abhängt. Ein bevorzugter Bereich für diese Pulsanzahl liegt etwa zwischen 3 und 4 Impulsen. In einer ganz besonders bevorzugten Ausführungsform der Erfindung wird nach Abschluss des Lernverfahrens zur Verbesserung der Regelung eine der anzunehmenden Druckdifferenz entsprechende Stromreduzierung vorgenommen. Hierdurch ergibt sich eine Vorgabe des Druckaufbaugradienten G in Abhängigkeit von I und $\Delta p$.

Nach einer weiteren bevorzugten Ausführungsform der Erfindung wird die fest vorgegebene Ansteuerkennlinie, welche durch das vorstehend beschriebene Verfahren korrigiert wird, selbst in einem weiteren Verfahren durch das elektronische Steuergerät z.B. bei der erstmaligen Inbetriebnahme selbst ermittelt. Während des zweiten, weiteren Kalibrierverfahrens wird insbesondere eine Öffnungsstromkennline $I = G(\Delta p)$ festgelegt, welche in Verbindung mit den weiter oben ermittelten Korrekturfaktoren zu korrigieren Ansteuerkennlinie nach der Erfindung führt.

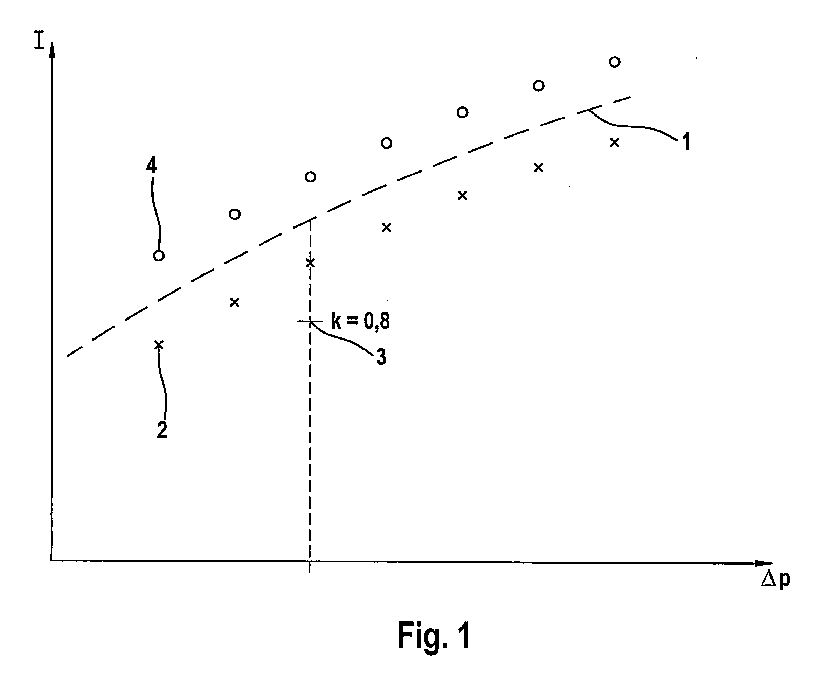

An Hand des Ausführungsbeispiels in Fig. 1 wird die Erfindung nachfolgend weiter erläutert.

In der Graphik von Fig. 1 ist die Ansteuerkennlinie G 1 für ein elektrisch ansteuerbares Hydraulikventil dargestellt. Die X-Achse bezeichnet die Druckdifferenz am Ventil bei noch geschlossenem Ventil. In Y-Richtung ist der Ventilspulenstrom aufgetragen, welcher zur Einstellung einer bestimmten Druckdifferenz benötigt wird. Kurve 1 entspricht dem aufzubringenden Öffnungsstrom $I_{Open}$, bei dem sich das Ventil gerade öffnet. Es handelt sich dabei um die zu kalibrierende Ansteuerkurve, die dem Lernverfahren als Ausgangspunkt zu Grunde gelegt wird. Es ist sinnvoll, für Kurve 1 einen mittleren Verlauf festzulegen, welcher für alle Ventile einer Baureihe geeignet ist und diese Kurve in einem Speicher des Reglers der Vorrichtung permanent zu speichern. Punkte 2 sind Messwerte eines Ventils in der hier betrachteten Bremsvorrichtung. Punkte 4 entsprechen Messwerten eines anderen Ventils der gleichen Serie, welches auf Grund von Fertigungstoleranzen ein vom hier betrachteten Ventil abweichendes Verhalten hinsichtlich der Öffnungsstrom-Druckkurve hat.

Zunächst wird ein "fester" Druckaufbaugradient $G_{fest}$ von 300 bar/s vorgegeben. Im elektronischen Regler der Bremsvorrichtung sind, wie bereits gesagt, in einem Speicher für jedes Ventil individuell Kurven $I_{Open} = G(\Delta p)$ abgelegt, die den Strom angeben, bei dem das betreffende Ventil gerade öffnet. Der zunächst gespeicherte Wert $I_{Open}$ trägt noch nicht vollständig den fertigungsbedingten Toleranzen des Ventils Rechnung, so dass diese Kurve durch das beispielgemäße Verfahren zu korrigieren ist. Hierzu wird zunächst aus der vom ABS vorgegebenen Druckdifferenz $\Delta p$ gemäß der Formel $T_{soll} = \Delta p / G_{fest}$ eine Solldruckaufbauzeit ermittelt. Als Startwert für den Korrekturfaktor $k_1$ wird ein Wert von 0,8 vorgegeben. Für den ersten Regelzyklus ergibt sich daraus ein Sollstrom von $I_{Soll} = I_{Open} * k_1$ (Punkt 3 in Fig. 1). Der jeweils aktuelle Wert für die Korrekturgröße k wird nach der folgenden Formel gebildet:

$$k_n = 1 - (1 - K_{Fil,n-1}) * \sqrt{(T_{ist,n} / T_{soll,n})}.$$

Dabei ist

$$k_{Fil,n-1} = ((K_{Fil,n-2} * (n - 2)) + k_n) / (n-1).$$

wobei n die Anzahl der gelernten Werte k ist,
$T_{ist}$ die aufsummierte Aufbauzeit des aktuell durchgeführten Druckaufbaus und
$T_{Soll}$ die aus der gewünschten Druckdifferenz (ermittelt aus dem vorrangegangenen Druckabbau) und dem Sollgradient berechnete Solldruckaufbauzeit.

Dies zeigt, dass die Abweichung zwischen dem vorgegebenen Druckaufbaugradienten und dem tatsächlichen Druckaufbaugradienten zur rekursiven Optimierung der Ansteuerkennlinie eines Hydraulikventils herangezogen werden kann.

**Patentansprüche**

1. Verfahren zur Kalibrierung von einem oder mehreren elektrisch angesteuerten analog betreibbaren Hydraulikventilen, wobei während des Betriebs einer Bremsvorrichtung, insbesondere einer Blockierschutzregelung, zunächst zumindest eine oder jeweils eine Ansteuerkennlinie vorgegeben wird und dann die vorgegebene Ansteuerkennlinie in einem Lernverfahren korrigiert wird, wobei Korrekturgrößen zur Korrektur der vorhandenen Ansteuerkennlinie ermittelt werden, **dadurch gekennzeichnet, dass** mittels des Lernverfahrens für ein Ventil ein Korrekturfaktor $k$ gebildet wird, welcher mit einer vorgegebenen Ansteuerkennlinie des Ventils zur Bildung einer korrigierte Ansteuerkennlinie multipliziert wird, wobei die Korrekturgröße $k$ gebildet wird, entweder nach der Formel

$$k_n = 1 - (1 - K_{Fil,n-1}) * \sqrt{(T_{ist,n} / T_{soll,n})},$$

wobei

$$k_{fil,n-1} = ((K_{fil,n-2} * (n - 2)) + k_n) / (n-1),$$

n die Anzahl der gelernten Werte k,
$T_{ist,n}$ die aufsummierte Aufbauzeit/Druckanforderung des aktuell durchgeführten Druckaufbaus und
$T_{Soll,n}$ die aus der gewünschten Druckdifferenz und dem Sollgradient berechnete Solldruckaufbauzeit ist, worin die Druckdifferenz aus dem vorrangegangenen Druckabbau ermittelt wird, und/oder
bei der Ermittlung der Korrekturgröße k eine Größe Q mit eingeht, welche der Quotient zwischen der Druckabbaudifferenz $\Delta P_{Abbau}$ des vorrangegangenen Druckabbaus und der Druckaubaudifferenz $\Delta P_{Aufbau}$ des aktuell aufgebauten Drucks ist.

2. Verfahren nach Anspruch 1, **dadurch gekennzeichnet, dass** sich das Lernverfahren über mehrere Zyklen der Blockierschutzregelung mit der Anzahl n hinweg erstreckt und in jedem oder in jedem geeigneten Zyklus mit Hilfe der aus dem aktuellen Zyklus ermittelten Parameter nach einer rekursiven Formel eine Korrektur der vorgegebenen Kennlinie durchgeführt wird .

3. Verfahren nach Anspruch 1 oder 2, **dadurch gekennzeichnet, dass** zur Korrektur die während einer Radregelung benötigten Druckaufbauzeiten oder Druckanforderungen gesammelt und jeweils auf Grundlage der vorliegenden gesammelten Druckaufbauzeiten oder Druckanforderungen eine korrigierte Kennlinie oder Korrekturgrößen berechnet wird/werden.

**4.** Verfahren nach mindestens einem der vorhergehenden Ansprüche, **dadurch gekennzeichnet, dass** die vorgegebene Ansteuerkennlinie in der zugrundeliegenden Bremsvorrichtung vor dem ersten Lernzyklus werksseitig fest oder löschbar gespeichert ist oder gemäß einem zweiten, weiteren Kalibrierverfahren ermittelt wird.

**5.** Verfahren nach mindestens einem der vorhergehenden Ansprüche, **dadurch gekennzeichnet, dass** während des Lernverfahrens ein für die Bremsvorrichtung als optimal anzusehender Wert für den Druckaufbaugradienten vorgeben wird, welcher mit Hilfe der ermittelten Korrekturgrößen oder der ermittelten korrigierten Ansteuerkennlinie zumindest bei der aktuellen Regelung bis zum Abschluss der Regelung nicht verändert wird.

**6.** Verfahren nach Anspruch 5, **dadurch gekennzeichnet, dass** der vorgegebene Druckaufbaugradient der Blockierschutzregelung unter Verwendung der ermittelten Korrekturgrößen oder der ermittelten korrigierten Ansteuerkennlinie für bestimmte Fahrsituationen unterschiedlich eingestellt wird, wobei das Lernverfahren für neu vorgegebene Gradienten speziell für den neu vorgegebenen Gradienten durchgeführt wird.

**7.** Computerprogrammprodukt, **dadurch gekennzeichnet, dass** dieses in Verbindung mit einem Rechenwerk ein Verfahren gemäß mindestens einem der Ansprüche 1 bis 6 durchführt.

**Claims**

**1.** Method for the calibration of one or more electrically actuated hydraulic valves of analog operation, wherein during the operation of a brake device, in particular an anti-lock control, initially at least one or respectively one actuation characteristic curve is predetermined, and the predetermined actuation characteristic curve is then corrected in a learning method, wherein correction variables are determined for the correction of the existing actuation characteristic curve,
**characterized in that** a learning method is used to produce a correction variable $k$ for a valve, which is multiplied by a predetermined actuation characteristic curve of the valve in order to produce a corrected actuation characteristic curve, and the correction variable $k$ is produced according to the formula

$$k_n = 1 - (1 - K_{Fil,n-1}) * \sqrt{} \; (T_{actual,n} / T_{nominal,n})$$

wherein

$$k_{Fil,n-1} = ((K_{Fil,n-2} * (n - 2)) + k_n) / (n-1),$$

n is the number of the learned values k,
$T_{actual,n}$ is the summed-up increase time/pressure requirement of the currently performed pressure increase, and
$T_{nominal,n}$ is the nominal pressure increase time calculated from the desired pressure difference and the nominal gradient, and the pressure difference is determined from the previous pressure reduction, and/or
a quantity Q is included when determining the correction variable k, which is the quotient between the pressure reduction difference $\Delta P_{reduction}$ of the previous pressure reduction and the pressure increase difference $\Delta P_{increase}$ of the currently increased pressure.

**2.** Method as claimed in claim 1,
**characterized in that** the learning method extends over several cycles of the anti-lock control with the number $n$, and in each cycle or in each suitable cycle, a correction of the predetermined characteristic curve is performed according to a recursive formula by means of the parameters established in the present cycle.

**3.** Method as claimed in claim 1 or 2,
**characterized in that**, for correction purposes, the pressure increase times required during wheel control or pressure requirements are collected, and a corrected characteristic curve is or correction variables are calculated respectively on the basis of the prevailing collected pressure increase times or pressure requirements.

**4.** Method as claimed in at least one of the preceding claims,

**characterized in that** the predetermined actuation characteristic curve in the basic brake device is stored to be fixed or to be deletable at the factory site prior to the first learning cycle, or is determined according to a second, additional calibration process.

**5.** Method as claimed in at least one of the preceding claims,
**characterized in that** during the learning method, a value which is considered as optimal for the brake device is predetermined for the pressure increase gradient, which value is at least not modified in the current control until completion of the control by means of the determined correction variables or the determined corrected actuation characteristic curve.

**6.** Method as claimed in claim 5,
**characterized in that** the predetermined pressure increase gradient of the anti-lock control is adjusted differently for defined driving situations by using the determined correction variables or the determined corrected actuation characteristic curve, and the learning method for newly predetermined gradients is performed especially for the newly predetermined gradient.

**7.** Computer program product,
**characterized in that** said product along with an arithmetic unit implements a method as claimed in at least one of claims 1 to 6.

**Revendications**

**1.** Procédé pour étalonner une ou plusieurs soupapes hydrauliques commandées électriquement et pouvant fonctionner de manière analogique pendant le fonctionnement d'un dispositif de freinage, en particulier d'une régulation d'antiblocage, au moins une ou chaque fois une courbe caractéristique de commande étant d'abord prédéfinie, puis la courbe caractéristique de commande prédéfinie étant corrigée dans un procédé d'apprentissage, des grandeurs de correction étant déterminées pour la correction de la courbe caractéristique de commande présente, **caractérisé en ce qu'**au moyen du procédé d'apprentissage il est formé pour une soupape un facteur de correction k qui est multiplié par une courbe caractéristique de commande prédéfinie de la soupape pour former une courbe caractéristique de commande corrigée, la grandeur de correction k étant formée, soit selon la formule

$$k_n = 1 - (1 - k_{\text{Fil},n-1}) * \sqrt{} (T_{\text{ist},n} / T_{\text{soll},n}),$$

dans laquelle

$$k_{\text{Fil},n-1} = ((k_{\text{Fil},n-2} * (n - 2)) + k_n) / (n-1),$$

n étant le nombre de valeurs *k* apprises,
$T_{\text{ist},n}$ étant le temps de montée en pression/demande de pression totalisé de la montée en pression exécutée à l'instant, et
$T_{\text{soll},n}$ étant le temps de consigne de montée en pression calculé à partir de la différence de pression souhaitée et du gradient de consigne, la différence de pression étant déterminée à partir de la réduction de pression précédente, et/soit
dans la détermination de la grandeur de correction k entre une grandeur Q qui est le quotient de la différence de réduction de pression $\Delta P_{\text{Abbau}}$ de la réduction de pression précédente et de la différence De montée en pression $\Delta P_{\text{Aufbau}}$ de la pression augmentée actuelle.

**2.** Procédé selon la revendication 1, **caractérisé en ce que** le procédé d'apprentissage s'étend sur plusieurs cycles de la régulation d'antiblocage avec le nombre *n* et dans chaque cycle ou dans chaque cycle approprié il est procédé à une correction de la courbe caractéristique prédéfinie, à l'aide des paramètres déterminés à partir du cycle actuel, selon une formule récurrente.

**3.** Procédé selon la revendication 1 ou 2, **caractérisé en ce que** pour la correction, les temps de montée en pression ou les demandes de pression nécessaires pendant une régulation de roue sont collectées, et dans chaque cas sur la base des temps de montée en pression ou des demandes de pression recueillis existants il est calculé une courbe caractéristique ou corrigée ou des grandeurs de correction.

4. Procédé selon au moins l'une des revendications précédentes, **caractérisé en ce que** la courbe caractéristique de commande prédéfinie est mémorisée à l'usine de manière permanente ou effaçable dans le dispositif de freinage considéré, avant le premier cycle d'apprentissage, ou est déterminée selon un second procédé d'étalonnage complémentaire.

5. Procédé selon l'une au moins des revendications précédentes, **caractérisé en ce que** pendant le procédé d'apprentissage, il est défini une valeur à considérer comme optimale pour le dispositif de freinage, pour le gradient de montée en pression, laquelle n'est pas modifiée à l'aide des grandeurs de correction déterminées ou de la courbe caractéristique de commande corrigée déterminée, au moins lors de la régulation actuelle jusqu'à la conclusion de la régulation.

6. Procédé selon la revendication 5, **caractérisé en ce que** le gradient de montée en pression prédéfini de la régulation d'antiblocage est réglé différemment, par utilisation des grandeurs de correction déterminées ou de la courbe caractéristique de commande corrigée déterminée, pour des situations de conduite déterminées, le procédé d'apprentissage de nouveaux gradients prédéfinis étant exécuté spécialement pour le nouveau gradient prédéfini.

7. Produit de programme d'ordinateur, **caractérisé en ce que** ce produit, en combinaison avec une unité de calcul, met en oeuvre un procédé selon l'une au moins des revendications 1 à 6.

Fig. 1

EP 1 625 058 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0876270 A1
- DE 10142040 A1
- DE 19737779 A